Europäisches Patentamt

European Patent Office

Office européen des brevets

(19)

(11) Veröffentlichungsnummer: **0 082 121**
**A1**

(12) **EUROPÄISCHE PATENTANMELDUNG**

(21) Anmeldenummer: **82830292.7**

(22) Anmeldetag: **01.12.82**

(51) Int. Cl.³: **C 09 D 9/00**

(30) Priorität: **04.12.81 IT 485081**

(43) Veröffentlichungstag der Anmeldung: **22.06.83**
**Patentblatt 83/25**

(84) Benannte Vertragsstaaten: **AT BE DE FR GB NL**

(71) Anmelder: **Ardolino, Giovanni, Piazzetta Bersaglio, 6, I-39100 Bolzano (IT)**
Anmelder: **Maccacaro, Guido, Via Palermo 73/11, Bolzano (IT)**

(72) Erfinder: **Ardolino, Giovanni, Piazzetta Bersaglio, 6, I-39100 Bolzano (IT)**
Erfinder: **Maccacaro, Guido, Via Palermo 73/11, Bolzano (IT)**

(74) Vertreter: **Rinaldi, Carlo, Studio Brevetti Nazionali ed Esteri Via Rino Ruscello, 2, I-40134 Bologna (IT)**

(54) **Löschungmethode von Tusche und Tinte anderer Weise auf Transparentpapier durch Lösungsmittel und Einsaugendes Mittel.**

(57) Beschrieben wird ein Korrektursystem auf Pauspapier für Tusche- oder andere Tintenzeichnungen, das die Verwendung einer ersten flüssigen Substanz zur Verflüssigung der Tinte eines auszulöschenden Zeichens und eines aufsaugenden Mittels für die flüssig gewordene Tinte vorsieht; die erste Substanz enthält, in verschiedenen Verhältnissen, Verbindungen wie Alkohol, Keton, Aldehyd, schwache Säure, eine schwache Base; der genannten ersten Substanz wird eine starke Säure beigefügt, um ihr einen pH-Wert zwischen 0 und 2 zu geben; wobei das aufsaugende Mittel Watte, Gaze, Löschpapier, Kunst- oder echtes Leder in verschiedenen Formen ist;
eine zweite flüssige Substanz mit einem pH-Wert zwischen 12 und 14 wird dazu verwendet, um die von der ersten Substanz auf dem Papier verursachten Kräuselungen zu beseitigen.

LÖSCHUNGMETHODE VON TUSCHE UND TINTE ANDERER WEISE AUF TRANSAPARENTPAPIER DURCH LÖSUNGSMITTEL UND EINSAUGENDES MITTEL

Die vorliegende Erfindung betrifft ein System zur Korrektur von Tusche oder anderen Tintenzeichen auf herkömmlichem oder kunststoffbeschichtetem Pauspapier zwecks Ausbesserung der Zeichnung; sie betrifft im besonderen ein System, das die Verwendung eines flüssigen Mittels zur Verflüssigung der trockenen Tinte auf dem Blatt und eines aufsaugenden Mittels zur Entfernung genannter Tinte vorsieht, wobei genannte Methode zur Korrektur von Bleistiftzeichen geeignet ist.

Bekanntlich werden zur Zeit für die Korrektur von Zeichen auf Blättern der oben genannten Arten normalerweise Mittel wie Rasierklingen, Radiergummi, kleine, elektrisch betriebene Schleifscheiben oder andere Schleifmittel verwendet. Die Nachteile genannter Mittel sind insbesondere folgende:
die Rasierklingen verursachen eine laufende Verminderung der Blattdicke, vor allem wenn an derselben Stelle mehrere Korrekturen ausgeführt werden, wobei die Gefahr besteht, das Papier zu durchlöchern; sind ausgedehnte Zeichen auszulöschen, beansprucht dies viel Zeit und da die dünner gewordene Fläche grösser ist, verliert das Papier seine ursprünglichen Eigenschaften und neigt dazu, an den ausgelöschten Stellen für die anschliessende Korrektur nachteilige Welligkeiten aufzuweisen; es muss dann mit einem Bleistiftradiergummi über die ausgelöschte Fläche gefahren werden, um die Ge
fahr des Verwischens der Tinte bei der Korrektur einzu
schränken.

Der Radiergummi löscht trockene Tinte nur schwer aus und
erfordert eine lange Reibung an der auszulöschenden Stel
le; wird das Blatt nicht gut festgehalten, besteht die
Gefahr dasselbe zu beschädigen, indem man es zerknittert;
befeuchtet man den Radiergummi, wird seine Löschfähig
keit erhöht, gleichzeitig wird jedoch auch die Gefahr
grösser, das Blatt zu durchlöchern; der Radiergummi ist
nicht dazu geeignet, grössere Flächen auszulöschen.

Mit den elektrisch betätigten Schleifscheiben ist beson
dere Vorsicht anzuwenden, um bei zu starkem Druck auf
das Papier dasselbe nicht zu durchlöchern.

Zweck der vorliegenden Erfindung ist, die oben genannten
Nachteile zu beseitigen. Die Erfindung, wie sie in den
Ansprüchen gekennzeichnet ist, löst das Problem, indem
sie eine Methode schafft, durch die das auszulöschende
Zeichen mit einer Flüssigkeit bedeckt wird, die in der
Lage ist, die bereits trockene Tinte zu entpolymerisie
ren und sie in den flüssigen Zustand zurückzuversetzen,
wodurch deren Aufsaugen mittels eines Löschers möglich
wird.

Die durch die vorliegende Erfindung erzielten Vorteile
bestehen hauptsächlich in der Tatsache, dass sowohl die
Flüssigkeit, mit der das falsche, auszulöschende Zeichen
bedeckt wird, als auch der Löscher, mit dem die durch
das genannte Mittel verflüssigte Tinte entfernt wird, in bezug auf Zeit, Anwendungsschwierigkeit und insbeson
dere auf Beschädigung oder Korrosion des gezeichneten
Blatts , auf dem die anschliessenden Korrekturen äusserst
einfach angebracht werden können, keine Probleme mit
sich bringen.

Die Erfindung wird nachstehend eingehender erklärt, wo
bei ein nicht einschränkendes Beispiel angeführt wird.
Bei der in der vorliegenden Erfindung vorgestellten
Flüssigkeit handelt es sich um eine Mischung folgender
chemischer Verbindungen im folgenden Verhältnis:
- ein Teil denaturierter Alkohol zu 90°;
- ein Teil Eisessig;
- ein Teil handelsübliches Azeton;
- ein halber Teil Schwefelsäure in 20%iger Konzentration.

Das Auslöschen mit der genannten Flüssigkeit erfolgt, in
dem man einen Watte- oder Gazebausch leicht befeuchtet
und damit die auszulöschende Fläche abreibt. Auf diese
Weise verflüssigt sich die trockene Tinte der Zeichnung
und wird von der Baumwollfaser aufgesaugt; die restli
che Flüssigkeit verdunstet und das Blatt kann nun opti
mal korrigiert werden. Während des Auslöschens ist da
rauf zu achten, dass das Blatt nicht mit bereits mit
Tinte getränktem Bausch abgerieben wird; beim Auslö
schen ist es ratsam, den Bausch zu drehen, damit das
Blatt mit stets reiner Faser in Berührung kommt. Zwecks
besserer Ausführung des Vorgangs ist der Bausch mit ei
ner Pinzette zu erfassen, um eine kleine Menge Flüssig
keit aufzunehmen und sodann damit die entsprechende
Stelle abzureiben.

Sollte zufällig ein Tropfen der genannten Flüssigkeit

- 4 -

auf ein nicht auszulöschendes Zeichen fallen, genügt es, die Flüssigkeit ohne zu reiben verdunsten zu lassen; auf diese Weise bleibt das Zeichen einwandfrei erhalten, falls die Flüssigkeitsmenge nicht zu gross ist.

Die Zusammensetzung der Flüssigkeit kann geändert werden, sowohl indem man das Verhältnis der einzelnen Bestandteile verändert, als auch indem man andere Bestandteile mit gleichartigen chemischen Eigenschaften beseitigt und/oder hinzufügt; es ist daher möglich, eine Reihe von Flüssigkeiten zu schaffen, die in der Lage sind, eingetrocknete Tinten auf Blättern der genannten Art auszulöschen und gleichzeitig ist es möglich, als aufsaugendes Mittel Löschpapier, Kunst- oder echtes Leder oder andere Mittel sowohl in Bäuschen als auch in Pulver sowie in Tüchern zu verwenden.

Es wird beschrieben, wie eine Flüssigkeit der genannten Art auf eingetrocknete Tinte wirkt.

Die Tinten, insbesondere die Tuschen, sind wasseranziehende Substanzen, weshalb eine Flüssigkeit, die eingetrocknete Tinte auf einem Blatt in den flüssigen Zustand zurückversetzen soll, ebenfalls eine wasseranziehende Substanz sein muss und ausserdem die Eigenschaft besitzen muss, das Pauspapier nicht zu beschädigen.

Wenn die Tinte auf das Zeichenblatt aufgetragen wird, verdunsten die Lösungsmittel, welche die Tinte flüssig erhielten, die gezogenen Striche trocknen und die Farbstoffe polymerisieren und haften so am Blatt an; sobald der Polymerisationsprozess, eine gewisse Zeit nach Ausführung des Zeichens, abgeschlossen ist, ist die Wir

- 5 -

kung hydrofiler Lösungsstoffe nicht ausreichend, um die polymerisierte Tinte in den Flüssigzustand zurückzuver setzen. Aus diesem Grund wird es notwendig, zu den ge nannten Lösungsmitteln eine Substanz hinzuzufügen, die in der Lage ist, die getrocknete Tinte zu entpolymeri sieren. Die gewählte Substanz muss einen vom Neutral wert (pH=7) stark abweichenden pH-Wert aufweisen; je stärker nämlich der pH-Wert der genannten Substanz vom Neutralwert abweicht, umso grösser ist ihre Entpolyme risationfähigkeit gegenüber der getrockneten Tinte und umso geringer ist die Anwesenheit ungebundener Wasser moleküle, die für die Kräuselung des nassen oder feuch ten Papiers verantwortlich sind. Die Anwendung einer Substanz der oben genannten Art, wenn sie auch keine Kräuselung des Papiers hervorruft, kann jedoch das Pa pier verändern, das somit für die anschliessende Kor rektur nicht mehr geeignet ist.

Aus diesen Ausführungen ergibt sich: eine Flüssigkeit beinhaltend hydrofile Lösungsmittel der oben genannten chemischen Klasse vorausgesetzt, hängt ihre Fähigkeit, getrocknete Tinten auf Pauspapier auszulöschen, vom pH-Wert ab, den die Flüssigkeit erreicht. Titriert man sodann mit einer starken Base eine Flüssigkeit mit einem nullnahen pH-Wert und die ausser einer starken Säure eine schwache Säure, ein Keton und einen Alko hol enthält, bis zu einer Flüssigsubstanz mit pH=7, ist es möglich, auf Grund der Löschfähigkeit der Flüs sigkeit ph-Wert-Bereiche festzulegen; dies wurde ver suchsweise ausgeführt und die erzielten Ergebnisse sind nachstehend angeführt:

pH-Wert zwischen 5 und 7: geringe Auslöschfähigkeit; Neigung zur Kräuselung des Papiers;

pH-Wert zwischen 2 und 5: Auslöschfähigkeit nur bei frisch aufgetragenen Tinten; unerhebliche Neigung zur Kräuselung des Papiers;

pH-Wert zwischen 1 und 2: Auslöschfähigkeit auch nach langer Trocknung der Tinte; keine Neigung zur Kräuselung des Papiers;

pH-Wert zwischen 0 und 1: optimale Auslöschfähigkeiten; unerhebliche Neigung zur Kräuselung des Papiers.

Titriert man sodann mit einer starken Säure eine Flüssigkeit mit einem pH-Wert nahe an 14, die ausser einer starken Base einen Alkohol und Ammoniak enthält, bis eine Flüssigkeit mit pH=7 erreicht wird, ist es wiederum möglich, auf Grund der Auslöschfähigkeit der Flüssigkeit, pH-Wert-Bereiche festzulegen; die Versuche haben folgende Ergebnisse erbracht:

pH-Wert zwischen 12 und 14: gute Auslöschfähigkeit bei frisch aufgetragenen Tinten, annehmbar bei seit langem aufgetragenen Tinten; keine Neigung zur Kräuselung des Papiers;

pH-Wert zwischen 10 und 12: Auslöschfähigkeit bei frisch aufgetragener Tinte; leichte Neigung zur Kräuselung;

pH-Wert zwischen 7 und 10: keine Auslöschfähigkeit; starke Neigung zur Kräuselung des Papiers.

Da die Auslöschfähigkeit bei einer Flüssigkeit mit pH-Wert zwischen 0 und 1 gegeben ist und da genannte Flüssigkeit eine wenn auch nur leichte Kräuselung des Papiers hervorruft, welche die anschliessende Korrektur, besonders mit Zeichenwerkzeug, behindert, wurde dieser Nachteil durch eine zweite, auf die vor her ausgelöschte Stelle des Papiers aufzutragende Flüs sigkeit behoben; wobei die zweite Flüssigkeit be steht aus:

drei Teile Alkohol; ein Teil Ammoniak; Natriumhydroxyd; wobei genannte zweite Flüssigkeit einen pH-Wert zwi schen 12 und 14 aufweist. Die zweite Flüssigkeit bleibt auch dann wirksam, wenn das Ammoniak besei tigt wird oder wenn Flüssigseife mit Alkohol vermischt wird, falls der pH-Wert innerhalb der oben genannten Grenzen bleibt.

Die genannte zweite Flüssigkeit wird mit Hilfe eines Wattebauschs auf die ausgelöschte Stelle aufgetragen.

ANSPRÜCHE

1. Korrektursystem auf normalerweise für Tusche- und andere Tintenzeichnungen benutztem Pauspapier mit Hilfe einer Lösungsflüssigkeit und eines aufsaugenden Mittels, das den Gebrauch einer ersten Flüssigkeit zur Verflüssigung der Tinte eines auszulöschenden Zeichens und eines aufsaugenden Mittels für genannte verflüssigte Tinte vorsieht, gekennzeichnet dadurch, dass genanntes erstes Mittel einzeln oder in Verbindung, nach unterschiedlichen Verhältnissen folgende chemische Verbindungen enthält: einen Alkohol; ein Keton; ein Aldehyd; eine schwache Säure; eine schwache Base; wobei der so gebildeten, genannten ersten Substanz eine starke Säure in einem Verhältnis beigefügt wird, um für genannte erste Substanz einen pH-Wert zwischen 0 und 2 zu erreichen; wobei genanntes aufsaugendes Mittel vorzugsweise: Watte, Gaze, Löschpapier, Kunst oder reines Leder, in Form von Bäuschen, Pulver oder Gewebe ist.

2. Korrektursystem nach Anspruch 1, dadurch gekennzeichnet, dass der pH-Wert der genannten ersten Substanz zwischen 0 und 1 liegt; wobei eine zweite flüssige Substanz zur Beseitigung leichter, von der ersten Substanz hervorgerufener Kräuselungen des Papiers verwendet wird; wobei man genannte zweite Substanz dadurch erhält, indem man chemische Verbindungen wie Alkohol, Ammoniak, Flüssigseife und Natriumhydroxyd in unterschiedlichen Verhältnissen mischt, um ihr einen pH-Wert zwischen 12 und 14 zu verleihen.

3. System nach Anspruch 1, dadurch gekennzeichnet, dass genannte erste Substanz durch die Mischung einer starken Base mit einem Alkohol und Ammoniak erzielt wird; wobei der genannten ersten, auf diese Weise erhaltenen Substanz eine starke Säure in einem Verhältnis beigefügt wird, damit der pH-Wert der genannten ersten Substanz zwischen 12 und 14 zu liegen kommt.

0082121

Europäisches
Patentamt

**EUROPÄISCHER RECHERCHENBERICHT**

Nummer der Anmeldung

EP 82 83 0292

## EINSCHLÄGIGE DOKUMENTE

| Kategorie | Kennzeichnung des Dokuments mit Angabe, soweit erforderlich. der maßgeblichen Teile | Betrifft Anspruch | KLASSIFIKATION DER ANMELDUNG (Int. Cl. 3) |
|---|---|---|---|
| A | CHEMICAL ABSTRACTS, Band 96, 1982, Seite 75, Nr. 21462z, Columbus, Ohio, USA & JP - A - 81 39823 (NORIHIRO KANEKO) 16.09.1981 --- | | C 09 D 9/00 |
| A | CHEMICAL ABSTRACTS, Band 84, 1976, Seite 106, Nr. 75955h, Columbus, Ohio, USA & JP - A - 75 130 807 (KOICHI WAKATSUKI) 16.10.1975 --- | | |
| A | CHEMICAL ABSTRACTS, Band 87, 1977, Seite 92, Nr. 186242e, Columbus, Ohio, USA & JP - A - 77 77176 (SEIJI NAGANUMA) 29.06.1977 ----- | | |

| RECHERCHIERTE SACHGEBIETE (Int. Cl. 3) |
|---|
| C 09 D |

Der vorliegende Recherchenbericht wurde für alle Patentansprüche erstellt.

| Recherchenort | Abschlußdatum der Recherche | Prüfer |
|---|---|---|
| DEN HAAG | 21-03-1983 | GIRARD Y.A. |

EPA Form 1503 03 82